# EUROPEAN PATENT APPLICATION

(11) **EP 0 669 733 A2**
(43) Date of publication of application: **30.08.1995**
(21) Application number: 95300950.3
(22) Date of filing: 15.02.1995
(51) Int. Cl.: H04L 12/00

(54) **Network agents**

(30) Priority: 28.02.1994 US 203147
(71) Applicant: AT&T Corp., New York, NY 10013-2412 (US)
(72) Inventor: Coen, Michael Harlan, Cambridge, Massachusetts 02139 (US); Kautz, Henry Alexander, Summit, New Jersey 07901 (US); Ketchpel, Steven Paul, Simsbury, Connecticut 06070 (US); Selman, Bart, Summit, New Jersey 07901 (US)
(74) Representative: Watts, Christopher Malcolm Kelway, Dr.

(57) **Abstract**

A network agent system in which the functions of the agent are partitioned between a task agent and a user agent for each user of the the agent system. The task agent and the user agents communicate by means of a protocol which is implemented in electronic mail messages. The messages of the protocol are intensional rather than extensional, and the response of a user agent to a message is determined by the user's hardware environment and preferences. The partition of the functions and the use of electronic mail as the communications medium provide important advantages in the areas of security, privacy, and adaptability. The disclosed network agent is a scheduler for visitors. Features of the scheduler include a user interface which offers more than a yes-no choice and the translation of the scheduling problem into a general integer programming problem.

## Description

### Background of the Invention

### Field of the Invention

The invention disclosed herein concerns computer systems generally and more particularly concerns networked computer systems in which agents are used to perform remote operations.

### Description of the Prior Art

The advent of a world in which many computer systems are connected by communications networks has led to the notion of the *network agent*. A network agent is a program which uses resources and information available on the computer systems in the network to perform a task for a user of a computer system on the network. An example of such a task is scheduling meetings for a visitor. A network visitor agent can interact with computer systems attached to the network to find out when persons interested in meeting with the visitor can meet with him, and can then use this information to make a schedule which is acceptable to everyone. Network agents are described in Oren Etzioni, et al, *Building softbots for UNIX*, University of Washington Department of Computer Science Technical Report, 1992; Pattie Maes, ed., *Designing Autonomous Agents*, MIT/Elsevier, 1993; and Yoav Shoham, "Agent-oriented Programming, *Artificial Intelligence*, 50:51-92, 1993.

One system for constructing network agents is currently being developed by the General Magic Corporation. General Magic has created a language called *Telescript* for writing network agent programs. Any system connected to the network which has an interpreter for the Telescript language can execute messages written in Telescript. There are two drawbacks to this approach. First, Telescript messages are full-fledged programs, i.e., all of the functionality of the system which receives the telescript message is accessible to the telescript message. This in turn makes it possible to use Telescript messages to subvert the systems on which they are run. Put another way, with Telescript, one man's network agent might be another man's network worm or virus. Second, the behavior of a system which is executing a Telescript message is completely determined by the message. Different systems consequently require different messages. Moreover, there is no good way of varying what happens when a Telescript message is being executed according to the preferences of the entity to which the Telescript message is directed.

In distributed systems generally, security risks are minimized by requiring that a user for whom a computer system remotely executes a program be a user not only of the computer system from which the request for remote execution came, but also of the computer system upon which the remote execution is performed. The difficulty with this approach in the network agent area is that the need for the user who is employing the agent to be a user of any computer system which the agent uses greatly diminishes the value of agents.

There is, of course, one way in which a user of one computer system can communicate with a user of another computer system without being himself a user of the other computer system, and that is electronic mail. Security is achieved here by restricting the receipt of electronic mail to an electronic mail process. The user can read mail received by the process and if he wants, save the mail in a file accessible to the user. In advanced electronic mail systems, the user can program the electronic mail process to perform actions such as forwarding the user's mail, and electronic mail may include portions which, when interpreted by an electronic mail reader, produce audio, video, or images as well as text. However, even advanced electronic mail systems do not provide the functions necessary for the development of useful agents, nor do they have a capability for adapting to the needs of various environments or users.

What is needed, and what is provided by the apparatus and methods disclosed in the following, is network agents which are as capable as those produced using the Telescript language but additionally are easily adapted to different environments and user preferences and are further as safe as electronic mail messages.

### Summary of the Invention

The network agents of the invention have two components: a task agent and one or more user agents. The task agent performs a task using information which it requests from the user agents. Communication between the task agent and the user agents is by electronic mail messages. The task agent obtains information from a user agent by sending a message which indicates what the user agent is to do, but not how the user agent is to do it. The user to whom the user agent belongs can specify how the user agent is to respond to messages from the task agent. The use of electronic mail as the means of communication between the task agent and the user agent and the ability of the user to specify how the user agent is to respond to the message gives the network agents of the invention most of the power of prior-art network agents and much more security and flexibility. It is thus an object of the invention to provide improved network agents. Other objects and advantages of the apparatus and methods disclosed herein will be apparent to those of ordinary skill in the art upon perusal of the following Drawing and Detailed Description, wherein:

### Brief Description of the Drawing

FIG. 1 is an overview of the architecture of the network agents of the invention;
FIG. 2 shows a user interface generated by a user agent of the present invention;
FIG. 3 shows the user interface used to control a user agent of the present invention;
FIG. 4 shows a message sent from a task agent to a user agent of the present invention; and
FIG. 5 shows a reply message produced by a user agent of the present invention.

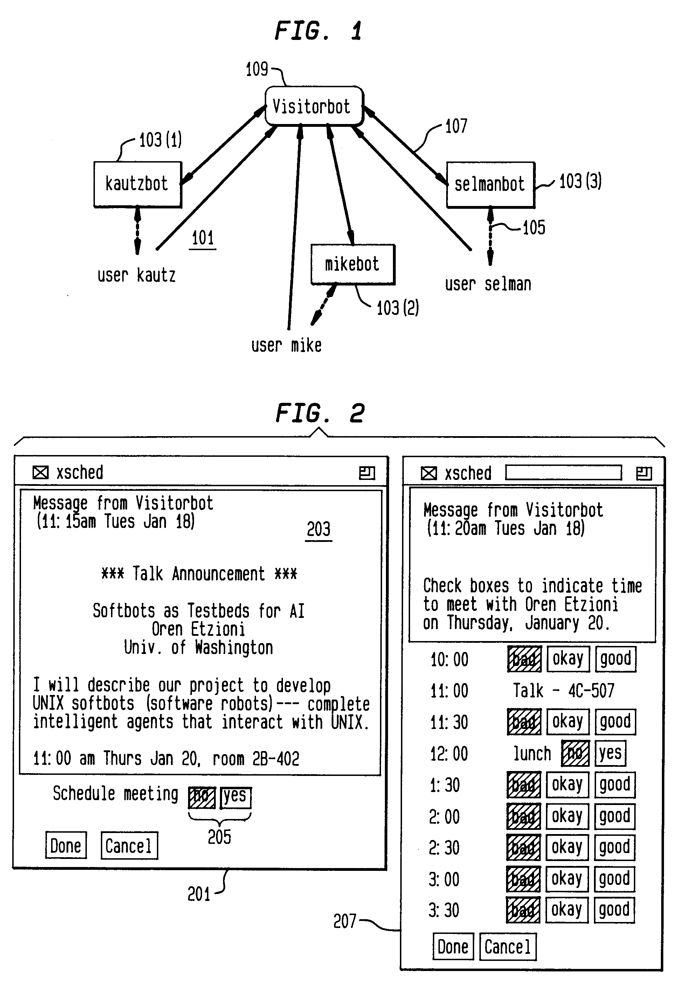

Reference numbers in the Drawing have two parts: the two least-significant digits are the number of an item in a figure; the remaining digits are the number of the figure in which the item first appears. Thus, an item with the reference number 201 first appears in FIG. 2.

### Detailed Description of a Preferred Embodiment

The following Detailed Description describes a scheduling agent which embodies the principles of agent construction disclosed herein. The scheduling agent schedules a visitor to a site such as a research laboratory. Agents performing similar functions have been described in Maes and Kozierok, "Learning interface agents", in *Proceedings of AAAI-93*, pp. 459-464, AAAI Press/The MIT Press, 1993, and L. Dent, et al., "A personal learning apprentice", in *Proceedings of AAAI-92*, pp. 96-103, AAAI Press/The MIT Press, 1992. This job is quite routine, but consumes a substantial amount of the host's time. The normal sequence of tasks consists of announcing the upcoming visit by electronic mail; collecting responses from people who would like to meet with the visitor, along with their preferred meeting times; putting together a schedule that satisfies as many constraints as possible (taking into account social issues, such as not bumping the lab director from the schedule); sending out the schedule to the participants, together with appropriate information about room and telephone numbers; and, of course, often rescheduling people at the last minute because of unforeseen events.

The preferred embodiment of the scheduling agent has the design shown in Fig. 1. Agent system 101 includes a task agent (here, visitorbot 109), which in this case does the actual scheduling, and a user agent (here, userbots 103(1..3)) for each user of the scheduling system. For example, the user agent 103(1) for the user "kautz" is named "kautzbot", agent 103(3) for "selman" is named "selmanbot", and so on. The userbots 103 mediate communication between visitorbot 109 and their human owners. Communication between visitorbot 109 and the userbots 103 is by electronic mail messages, indicated by solid lines 107. The users may also employ electronic mail to communicate directly with visitorbot 109. Communication between userbots 103 and the users to which they belong is by either a graphical interface or electronic mail; the combination is indicated by dashed lines 105.

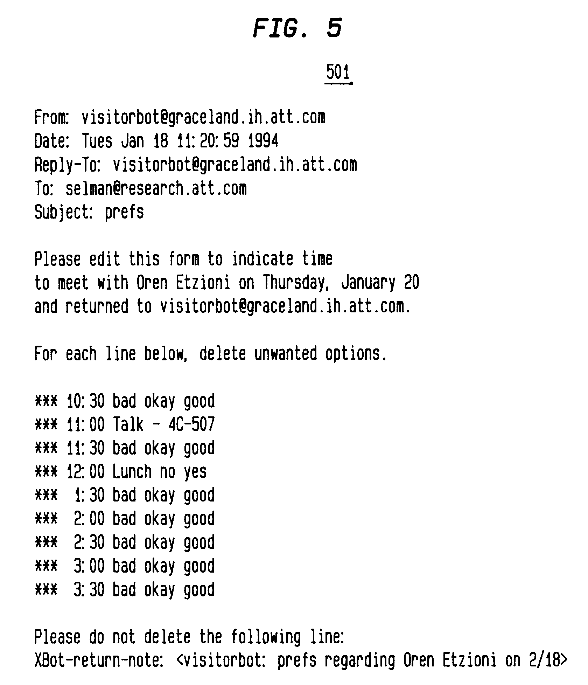

The normal interaction between the visitorbot and the users proceeds as follows. Visitorbot 109 mails an initial talk announcement which is readable by the userbots 103 to each userbot 103. Each userbot 103's user has specified to userbot 103 how it is to communicate with the user, and each userbot 103 uses the mode specified by its user in communicating the contents of the message received from visitorbot 109. What happens if the user is logged in on an X-terminal and has specified a graphical interface is shown in FIG. 2. Userbot 103 creates a pop-up window 201 on the user's screen, containing the announcement and a button 105 to press to request a meeting with the visitor. If the user clicks on "yes", userbot 103 passes this information back to visitorbot 109, which responds with a request to userbot 103 to obtain the user's preferred meeting times. Userbot 103 then creates a graphical menu 207 of meeting times. In a preferred embodiment, menu 207 offers three choices for each time slot, which permits more flexibility in scheduling than the usual yes-no choices. The user then simply clicks on buttons to indicate his or her preferences. Userbot 103 then generates a message containing the preferences and mails it back to visitorbot 109. If userbot 103 is unable to determine the display where the user is working, or if the user fails to respond to the pop-up displays, userbot 103 forwards the request from visitorbot 109 via electronic mail to the user as a plain text form. The form appears as form 501 in FIG. 5.

There are several important advantages of this design. First, visitorbot 109 does not need to know about the user's display, and does not need permission to create windows on that display. This means, for example, that a visitorbot 109 at Bell Labs can create a graphical window at any site that is reachable by electronic mail where there are userbots 103. It is of course sometimes possible to create a remote X-window over the internet, but this is prone to failure. Among other problems, the user would first have to grant permission to ("xhost") the machine running the visitorbot program; but the user will often not know the identity of the machine on which the agent program is running.

The separation of visitorbot 109 from the userbots 103 also simplifies the design of the former, since the userbots 103 handle the peculiarities of addressing the users' displays. Even more importantly, the particular information about the user's location and work habits does not have to be made available to visitorbot 109. This information can be kept private to the user and his or her userbot 103.

Another advantage of this design is that different users, who may have access to different computing resources, can run different userbots 109 of varying levels of sophistication. Thus, everyone is not restricted to a "least common denominator" type interface.

Perhaps the most important benefit of the design is that a task agent (such as visitorbot 109) is not tied to any specific form of communication with the user. The task agent specifies *what* information is to transmitted for obtained, but not *how* the communication should take place. In the case of visitorbot 109, for example, the message sent from visitorbot 109 to userbot 103 indicates the choices available to users, but it is userbot 103 which determines how these choices are actually presented to the user. Because that is the case, userbot 103 can employ a wide range of media, such as graphics, voice, FAX, electronic mail, etc. for interacting with its owner. Userbot 103 can also take into account its owner's preferences and such factors as the owner's whereabouts and current computing environment in deciding on the mode of communication. For example, a userbot 103 could incorporate a telephone interface with a speech synthesizer. This would enable a userbot to place a call to its owner (if the owner so desires), read the talk announcement, and collect the owner's preferences by touch-tone. Note that this extension does not require any modifications at all to visitorbot 109.

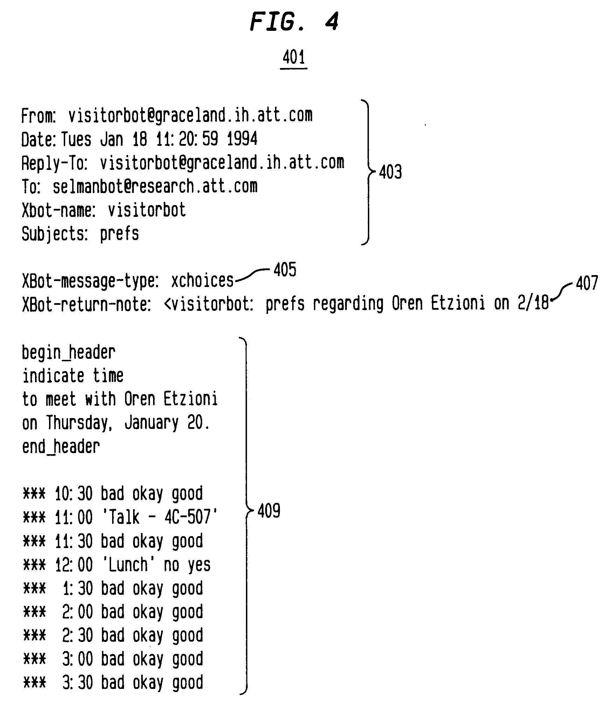

### Communication between Task Agents and User Agents: FIG. 4

In the preferred embodiment, visitorbot 109 communicates with userbots 103 by means of a simple set of protocols which are implemented as electronic mail messages. FIG. 4 shows the electronic mail message 401 which visitorbot 109 sends to a userbot 103 when userbot 103 is to solicit its user's time choices. One response which userbot 103 can make to this message is window 207.

In the preferred embodiment, electronic mail messages between agents are identified by a special header field, "XBot-message-type" 405. The message type indicates the general way in which the body of the message (if any) should be processed by the receiver. For example, the message type "xchoices" means that the message is a request for the receiver to make a series of *choices* from among one or more sets of alternatives described in the body of the message. The inclusion of the field "XBot-return-note" 407 in the message indicates that the result of processing the message should be mailed back to the sender. The communication protocol for the message 401 establishes the syntax for the data presented in the body 409 of each message type, and the format of the data that results from processing the message. However, the protocol deliberately does not specify the exact method by which the processing is carried out. For example, a userbot 103 may process an xchoices message 401 by creating a pop-up menu, or calling the user on the telephone, or simply by consulting a database of defaults that the user has established.

When applications are developed that demand novel kinds of interactions with userbots 103, the communication protocols can be extended by adding new message types. This can be done by mailing "update" messages to the userbots 103 which indicate to the userbots 103 how they are to handle the extensions. However, the agents which have thus far been constructed using the techniques described above have required only a very small number of message types (namely, ones for requesting choices, requesting help, and simply conveying a piece of information).

In essence, the messages that task bots 109 and userbots 103 exchange can be viewed as *intensions* - such as a request to make a choice - rather than *extensions* - such as a description of how the userbot is to ask the user to make the choice. As pointed out above, message 401 does exactly that: it indicates the set of choices to be made and how the choices are to be returned to visitorbot 109, but leaves it up to userbot 103 how to provide the set of choices to the userbot 103's user.

The fact that it is left to userbot 103 to determine how the set of choices is displayed to the user also makes it possible to take the user's personal preferences into account. For example, some users do not want window 207 to appear whenever the user's userbot 103 receives a message 401 from visitorbot 109. Consequently, in the preferred embodiment, the user can specify whether he wants windows 207 to automatically pop up. If he does not so specify, userbot 103 indicates arrival of a message by incrementing a counter, and the user chooses when he wants to see window 207. Userbot 103 runs continuously, collecting messages from the task bots 109 as they come in, and providing the contents of the messages to the user in response to requests from the user.

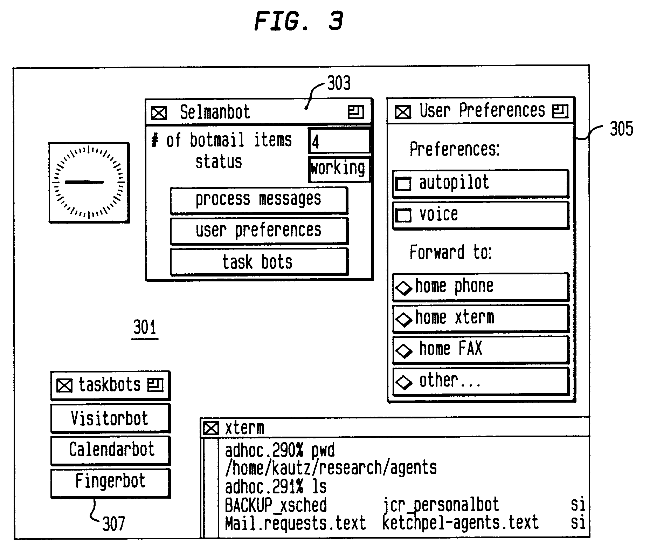

The displays by means of which the user controls the behavior of a userbot 103 in a preferred embodiment are shown in FIG. 3. Main userbot window 303 indicates the number of outstanding messages waiting to be processed, the userbot's status (working or idle), and three buttons. Clicking on the "process messages" button allows the userbot to process messages that require user interaction - for example, bringing up an xchoices window on behalf of the visitorbot.

The second button, "user preferences", brings up a window 305 in which the user can set various options in the behavior of his or her userbot 103. For example, checking the "autopilot" box in window 305 makes userbot 103 pop up windows without waiting to be explicitly told to do so. The "voice" checkbox causes userbot 103 to announce the receipt of new userbot mail using the speaker in a Sun workstation. The "forward to" options are used to indicate that userbot 103 should try to communicate with its owner at a remote location - for example, by transmitting messages via a FAX-modem to the owner's home telephone.

Finally, the third button in the main userbot window brings up the window 307 labeled "taskbots". This window contains a button for each task agent 109 whose electronic mail address is known to userbot 103. (This information is maintained in file that the user can easily customize.) Clicking on a button in window 307 initiates communication with the designed task agent, by sending a message of type "help" to that agent. The communication protocol specifies that the agent respond to a help message by sending back a menu of commands that the agent understands, together with some basic help information, typically in the form of an xchoices message. When userbot 103 processes this response, it creates a window containing the appropriate controls for interacting with that particular task agent. For example, a user who is hosting a visitor starts the entire scheduling process by clicking on the visitorbot button. This leads to the creation of a window containing buttons for basic visitorbot commands, such as scheduling a new visitor, getting the status of a visit, ordering a schedule to be generated, and so on. Clicking on some of these buttons leads to the creation of other windows, for example, one in which to type the text of the abstract of the visitor's talk.

It should be pointed out here that the calendarbot and the fingerbot are task agents 109 which run at remote sites. Communication between these task agents and user agents 103 at other remote sites is of course by means of electronic mail across the internet.

### Privacy and Security

An important problem in the design of network agents is privacy and security. Some proposed agent systems would filter through all of the user's electronic mail, pulling out and deleting messages that the agent would like to handle. Users generally object to giving a program permission to automatically delete any of their incoming mail. An alternative approach would give the agent authority to read but not modify the user's mail. The problem with this is that the user's mail quickly becomes polluted with the many messages sent between the various agents.

Our solution to the security problem has been to create a pseudo-account for each userbot 103, with its own mail alias. Mail sent to this alias is piped into userbot 103, which is executed under the corresponding user's id. This gives userbot 103 the authority, for example, to create a window on the user's display. Any "bot mail" sent to this alias is not seen by the user, unless userbot 103 explicitly decides to forward it.

In the preferred embodiment, each user has a special ".bot" directory, which contains information customized to the particular user. These files specify the particular program that instantiates userbot 103, a log of the userbot mail, and the user's default display id. In general, this directory contains user-specific information for userbot 103. The "bot" directory also enhances privacy, since the directory is not public, and can thus contain sensitive information for use by userbot 103. Examples of such information include the names of people the bot is not supposed to respond to, unlisted home telephone numbers, the user's personal schedule, and so on.

Thus, userbots 103 provide a general mechanism for the distribution and protection of information. For a concrete example, consider the information you get by running the UNIX operating system's "finger" command (UNIX is a trademark of Unix System Laboratories). Right now, you have to decide whether your home phone number will be available to everyone on the in-ternet, or no one at all. A straightforward task of your userbot would be to give out your phone number via electronic mail on request from (say) faculty members at your department and people listed in your address book, but not to every person who knows your login id.

Unlike agent systems such as the one produced by General Magic, user-bot systems are by nature secure, insofar as the routines for processing each message type within the userbot are secure. Although this is a non-trivial condition, it would appear to be easier to guarantee that the code of the userbot itself (that is presumably obtained from a trusted source) is secure than to guarantee that every electronic program (that could come from anyone) does not contain a virus. Extensions and updates to userbots to handle new message types would have to be distributed through secure channels, perhaps by using known cryptographic techniques.

### Details of the Embodiment

We now consider a concrete example of the interaction between visitorbot 109 and userbot 103. Visitorbot 103 wishes to obtain the preferences of a user with login name "selman" for meeting with a visitor named Oren Etzioni. Visitorbot 109 therefore sends electronic mail message 401 to userbot 103(3) for selman. This message is routed by the mail system to selmanbot 103(3). Selmanbot window 303 shows that there is mail to be processed (by incrementing the "# of botmail items" counter). If the user selman has checked the "autopilot" button in the User Preferences window 305, then the message is processed immediately; otherwise, it is held until the user presses the "process messages" button in window 303.

In either case, the message is then processed according to the user's preferences. By default, it is graphically displayed, as shown in window 207. The user selman then indicates his preferences by clicking on the various "bad", "okay", and "good" buttons in window 207, and finally clicking on the button "done". At this point, userbot 103 constructs a message listing the preferences for the different time slots, and mails it back to the visitorbot.

In case the user selman does not respond within one hour to the graphical display, or if he has indicated that he wishes to receive his messages by ordinary electronic mail instead of graphically (the preference for ordinary electronic mail can be set in the User Preferences window by selecting a submenu that appears when the button labeled "other..." in window 305 is clicked), userbot 103 converts the visitorbot message to the form shown in Fig. 5. The user selman reads this message using any ordinary mail-reading program, then makes a copy of it, edits the copy to indicate his preferred meeting times, and mails it back to visitorbot 109.

Now visitorbot 109 has obtained the preferred meeting times by the user selman. Visitorbot 109 similarly obtains preferences from all of the other users. Then it generates a schedule of times for people to meet with Oren Etzioni. Visitorbot 109 generates the schedule by translating the scheduling problem into an integer programming problem and solving the integer programming problem with a general integer programming package (CPLEX). An interesting advantage of this approach is that is easy to incorporate soft constraints (such as the difference between an "okay" time slot and a "good" time slot for a user) into the scheduling problem. Finally, visitorbot 109 distributes the schedule to all of the users.

### Mail-based Compute Serving

The userbot/taskbot architecture of FIG. 1 is an instance of a new style of client/server computing.

In client/server computing, a server process provides services for some number of client processes, that may be running on different physical machines. One example of this is the well-known Network File System used on SUN workstations, where the "nfs demon" server provides access to files for client processes that want to read or write files. Another example is the X-Windows graphics programming environment from MIT, where display servers draw graphics on display terminals in response to requests from various client programs (such as xterm, a terminal emulator, or xfig, a drawing program). What is common among these kinds of client/server architectures is that the client and server programs are tightly coupled, and require direct, low-level, real-time access between the client and server machines.

In the userbot/taskbot architecture, a taskbot (such as the visitorbot) provides a service to some number of userbots. Unlike the client/server systems just mentioned, however, the userbots and taskbots are loosely coupled, and (in our current system) communicate by electronic mail. No direct, low-level access is required between the userbot and taskbot machines. This provides a number of advantages:
· The client programs do not require detailed knowledge about the machine the server is running on, and vice-versa. For example, the client program would not need to know information such as the ethernet number, nor the internet numbers, nor even the actual machine name for server program. For example, a userbot can establish contact with the visitorbot running in our laboratory simply by sending electronic mail to the address "visitorbot@research.att.com". The mail system running in the "research.att.com" domain then directs the mail to the proper machine. It is trivial for the person maintaining the visitorbot system to change the machine the visitorbot runs on, by simply installing the software elsewhere and appropriately editing the local "mail alias" file, which is used to route the mail to a particular machine. Note that the client programs would not need to be informed of the change; the actual location of the server program is effectively invisible to them.
· Electronic mail access between client and server programs is often practical in situations where more direct, low-level access (such as through a remote procedure call) is impossible. Low level access is often deliberated blocked between computer networks for purposes of system security. Furthermore, even if low-level access can be establish, it can be easily disrupted if the computer at either end of the link, or any of the machines in between that maintain the link, crashes or become temporarily inoperative. In contrast, electronic mail systems are typically designed to function even in the face of machine failures; for example, when a machine fails, the electronic mail it is in the middle of processing is typically stored in a special "spool" file, and then, when the machine becomes operational again, the mail is processed again without any loss of messages.
· Security of communication between the client and server programs is inherited from the security of the mail system. Thus, if a secure mailer is installed (i.e. one based on cryptographic encodings of messages), then communication between the clients and servers is made equally secure, without modification of those programs.

Recently systems that provide electronic-mail based information services have become popular. An example of such a mail-based service is "Netlib". In this approach, the human user mails a message containing a command (from a restricted set of commands) to the service provider, which then responds by executing the command and mailing some result back to the user. For example, a person can mail a message of the form
To: netlib@research.att.com
send README from ampl/src
and the Netlib program will mail back the contents of the file named "README" that is stored in the subdirectory "ampl/src" in Netlib system.

Electronic mail information systems are thus closely related to for mail-based compute serving with the userbot/taskbot architecture. The important difference is that our approach includes *both* a service-providing taskbot and one or more userbots that are specially-designed to interact with each other. Systems such as Netlib only provide one-half of the equation; thus, interaction with systems such as Netlib is difficult for human users and is prone to failure due to typing errors, formatting errors, and so forth. Thus userbots greatly enhance the ease of use of mail-based servers.

Furthermore, in the future userbots could greatly expand the kind of services that the servers can provide. For example, completing some task may involve having a userbot and a taskbot exchange a series of electronic mail messages without direct human intervention, such as communicating certain user preferences and authority levels.

### Conclusion

The foregoing *Detailed Description* has disclosed to those skilled in the art how to construct a network agent system which includes a task agent for a task such as scheduling and a user agent for each user for which the task must be performed. The task agent and the user agents communicate by means of a protocol implemented in electronic mail messages. The partition of the functions of the network agent system into functions performed by the task agent and functions performed by the user agent provides important advantages in the areas of security, privacy, and adaptability both to different types of systems and to different user preferences.

The *Detailed Description* has also disclosed the best mode presently known to the inventors of making a visitor scheduling system which incorporates the principles of the invention. Of course, many other agent systems could be constructed according to the principles disclosed herein. Moreover, different protocols could be used in the electronic mail messages used to communicate between components of the agent system disclosed herein, and communications means other than electronic mail could be employed to carry the messages. Additionally, the windows disclosed herein are specific to the preferred embodiment. Agent systems performing other tasks will of course have other displays, and even the visitorbot system of the preferred embodiment can employ different user interfaces from those disclosed herein.

## Claims

1. Apparatus for implementing an agent which performs a task for one or more entities in a computer system,
the apparatus comprising:
a task agent for performing aspects of the task which involve more than one of the entities;
an entity agent associated with each of the entities; and
means for transferring messages governed by a common protocol between the task agent and the entity agents, each entity agent responding to the messages in a fashion which varies according at least to the environment of the entity agent's entity.

2. Apparatus including a client and a server, the apparatus being used in an environment having an electronic mail system for transferring electronic mail messages and
the apparatus having the improvement comprising:
means in the client for generating electronic mail messages for the server according to a protocol and responding to electronic mail messages from the server according to the protocol and
means in the server for generating electronic mail messages for the client according to the protocol and responding to electronic mail messages from the client according to the protocol.
